# EUROPÄISCHE PATENTANMELDUNG

(11) **EP 3 598 194 A1**
(43) Veröffentlichungstag der Anmeldung: **22.01.2020**
(21) Anmeldenummer: 18184823.5
(22) Anmeldetag: 20.07.2018
(51) Int. Cl.: G02B 21/36, G06K 9/00

(54) **VERFAHREN ZUR MIKROSKOPISCHEN AUSWERTUNG**

(71) Anmelder: Olympus Soft Imaging Solutions GmbH, 48149 Münster (DE)
(72) Erfinder: Krüger, Daniel, 10119 Berlin (DE); Diepenbrock, Stefan, 48151 Münster (DE); Wördemann, Mike, 48346 Ostbevern (DE)
(74) Vertreter: Patentanwälte Bals & Vogel

(57) **Zusammenfassung**

Die Erfindung betrifft ein Verfahren zur mikroskopischen Auswertung (120) einer Probe (2), insbesondere wenigstens einer ungefärbten Objekt- oder Zellprobe (2), bei einem optischen Erfassungssystem (1),
wobei die nachfolgenden Schritte durchgeführt werden:
- Bereitstellen von wenigstens zwei unterschiedlichen Erfassungsinformationen (110) über die Probe (2), insbesondere durch das Erfassungssystem (1),
- Durchführen einer Auswertung (120) der Erfassungsinformationen (110), insbesondere durch ein Auswertungsmittel (60), anhand einer maschinell angelernten Transferinformation (200), um eine Ergebnisinformation (140) über die Probe (2) zu bestimmen,
wobei die Transferinformation (200) für eine unterschiedliche Erfassungsparametrisierung der Erfassungsinformationen (110) angelernt ist, bei welcher sich die Erfassungsinformationen (110) zumindest hinsichtlich eines Beleuchtungsparameters des Erfassungssystems (1) voneinander kodiert, insbesondere polarisations- und/oder farbkodiert, unterscheiden.

## Beschreibung

Die vorliegende Erfindung betrifft ein Verfahren zur mikroskopischen Auswertung einer Probe. Ferner bezieht sich die Erfindung auf ein optisches Erfassungssystem, ein Computerprogramm sowie ein computerlesbares Medium.

Es ist aus dem Stand der Technik bekannt, dass Erfassungssysteme wie Mikroskope zur Durchlichtmikroskopie zur Analyse von Zellproben eingesetzt werden. Verfahren wie die Durchlichtmikroskopie bieten eine zuverlässige und etablierte Möglichkeit zur Analyse von Zellproben und basieren meist auf einem vergleichsweise technisch einfachen und damit kostengünstigeren Aufbau. Gleichwohl ist der hierdurch erhältliche Informationsgehalt über die zu untersuchende Probe gegebenenfalls geringer als bei komplexeren Mikroskopietechniken, wie der Fluoreszenzmikroskopie oder der Konfokalmikroskopie.

Eine gattungsgleiche Mikroskopietechnik ist beispielsweise aus der WO 2017/181044 A1 bekannt.

Es ist daher eine Aufgabe der vorliegenden Erfindung, die voranstehend genannten Nachteile zumindest teilweise zu reduzieren. Insbesondere ist es eine Aufgabe der vorliegenden Erfindung, die Analyse von Proben zu verbessern, wobei gleichzeitig der technische Aufwand hierzu reduziert werden soll.

Die voranstehende Aufgabe wird gelöst durch ein Verfahren mit den Merkmalen des Anspruchs 1, ein optisches Erfassungssystem mit den Merkmalen des Anspruchs 11, ein Computerprogramm mit den Merkmalen des Anspruchs 14 sowie durch ein computerlesbares Medium mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen optisches Erfassungssystem, dem erfindungsgemäßen Computerprogramm sowie dem erfindungsgemäßen computerlesbares Medium, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur mikroskopischen Auswertung einer Probe, insbesondere wenigstens einer ungefärbten Objekt- oder Zellprobe, bei einem optischen Erfassungssystem.

Vorteilhafterweise kann bei einem erfindungsgemäßen Verfahren zumindest einer der nachfolgenden Schritte durchgeführt werden, wobei die Schritte bevorzugt nacheinander in der angegebenen Reihenfolge oder in beliebiger Reihenfolge durchgeführt werden, und ggf. auch einzelne Schritte wiederholt werden können:
- Bereitstellen von wenigstens zwei unterschiedlichen Erfassungsinformationen über die Probe, insbesondere durch das Erfassungssystem,
- Durchführen einer Auswertung der Erfassungsinformationen, insbesondere durch ein Auswertungsmittel, anhand einer maschinell angelernten Transferinformation, um eine Ergebnisinformation über die Probe zu bestimmen.

Die Transferinformation ist dabei z. B. eine digital nicht-flüchtig gespeicherte Information, welche aus einem Anlernprozess (z. B. gemäß einem maschinellen Lernen) entstanden ist. Die Transferinformation kann z. B. einen Klassifikator oder ein Modell oder dergleichen aufweisen. Bevorzugt zeichnet dabei die Transferinformation aus, dass diese automatisiert durch eine künstliche Intelligenz oder dergleichen erzeugt wurde.

Es ist dabei optional möglich, dass die Transferinformation (insbesondere zum Transfer der Erfassungsinformationen in die Ergebnisinformation) für eine unterschiedliche Erfassungsparametrisierung der Erfassungsinformationen angelernt ist. Vorteilhafterweise können sich bei dieser unterschiedlichen Erfassungsparametrisierung die Erfassungsinformationen zumindest hinsichtlich eines Beleuchtungsparameters des Erfassungssystems voneinander (beispielsweise kodiert, insbesondere polarisations- und/oder farbkodiert) unterscheiden. Dies hat den Vorteil, dass relevante Informationen über die Probe mit hoher Zuverlässigkeit und insbesondere auch ohne genaue Kenntnisse des optischen Erfassungssystems oder eines zugrundeliegenden Modells extrahiert werden können.

Insbesondere ist es möglich ein erfindungsgemäßes Verfahren im Durchlichtverfahren zur Durchlichtmikroskopie (z. B. mit einem Durchlichtmikroskop als optisches Erfassungssystem) zu betreiben. Darüber hinaus ist es denkbar, dass die Auswertung zumindest teilweise durch den Einsatz selbstlernender Methoden, insbesondere aus dem Bereich des maschinellen Lernens erfolgt.

Vorteilhafterweise kann unter selbstlernenden Methoden verstanden werden, dass ein überwachtes Anlernen (Maschinenlernen) erfolgt, für welches ein Ground Truth ohne manuellen Eingriff (z. B. ohne Annotationen) generiert wird. Hierzu kann bspw. ein motorisierter Probentisch eingesetzt werden, um die Probe automatisiert zu bewegen und damit unterschiedliche Bereiche der Probe oder auch unterschiedliche Proben für eine Referenzerfassung erfassen zu können.

Die Erfassungsparametrisierung ist dabei vorzugsweise als eine Einstellung von Parametern bei der Erfassung bei dem optischen Erfassungssystem zu verstehen, sodass durch die unterschiedliche Erfassungsparametrisierung unterschiedliche Erfassungsinformationen erfasst werden können. In anderen Worten kann z. B. bei einer ersten Einstellung (d. h. einer ersten Parametrisierung) eine erste Erfassungsinformation erfasst werden und bei einer zweiten Einstellung (d. h. einer zweiten Parametrisierung), welche sich von der ersten Einstellung unterscheidet, eine zweite Erfassungsinformation erfasst werden, usw. Dabei können sich die Erfassungsinformationen in Abhängigkeit von der jeweils genutzten Erfassungsparametrisierung unterscheiden. Die Erfassungsparametrisierung kann somit eine Einstellung am Erfassungssystem sein, wie z. B. eine Einstellung eines Beleuchtungswinkels und/oder einer Beleuchtungsstruktur und/oder eines Beleuchtungsmusters und/oder einer Polarisierung und/oder einer Farbfilterung eines Beleuchtungslichts z. B. des Kondensors.

Es kann möglich sein, dass das Bereitstellen der wenigstens zwei unterschiedlichen Erfassungsinformationen durch ein Auswertungsmittel, wie z. B. durch ein Computerprogramm oder durch eine Elektronik oder durch wenigstens einen Prozessor, und/oder durch einen Computer erfolgt. Alternativ oder zusätzlich kann das Bereitstellen durch das Erfassungssystem durchgeführt werden, wobei die Erfassungsinformationen für eine Erfassung durch das optische Erfassungssystem spezifisch sind. In diesem Fall ist es von Vorteil, wenn das Bereitstellen als eine Aufzeichnung durch eine Detektionsvorrichtung, wie eine Kamera des Erfassungssystems, durchgeführt wird. Hierzu ist die Detektionsvorrichtung z. B. mit wenigstens einem Sensor ausgeführt, welcher zur Erfassung auf ein Beleuchtungslicht (des Detektionspfades) ausgerichtet ist, wobei das Beleuchtungslicht durch die Probe beeinflusst ist. Das Beleuchtungslicht wird dabei z. B. durch einen Kondensor erzeugt, und/oder durch ein Beleuchtungsmittel verändert, und/oder wird dadurch durch die Probe verändert, dass es auf die Probe abgestrahlt wird und diese damit beleuchtet.

Außerdem kann es im Rahmen der Erfindung möglich sein, dass das Auswertungsmittel als ein Computerprogramm, insbesondere Computerprogrammprodukt, ausgeführt ist. Bevorzugt kann das Computerprogramm ausschließlich in einer dauerhaften, nichtflüchtigen (engl. non-transitory) Form vorliegen, z. B. auf einem physikalischen Datenspeicher, wie einer Festplatte oder einem Flashspeicher oder dergleichen. Das Auswertungsmittel kann geeignet sein, durch eine Auswertevorrichtung ausgeführt zu werden, um wenigstens einen Verfahrensschritt eines erfindungsgemäßen Verfahrens zumindest teilweise durchzuführen. Die Auswertevorrichtung ist beispielsweise ein Computer oder eine Elektronik oder wenigstens ein Prozessor, welcher zum Ausführen des Auswertungsmittels mit wenigstens einem Datenspeicher verbunden sein kann. Diese Verbindung ist z. B. eine elektrische Verschaltung und/oder eine Signalverbindung, um das Auswertungsmittel aus dem Datenspeicher zu lesen. Ferner kann die Auswertevorrichtung wenigstens einen Prozessor aufweisen, um das ausgelesene Auswertungsmittel auszuführen. Gegebenenfalls kann hierzu auch wenigstens ein Zwischenspeicher zum Einsatz kommen, um z. B. die wenigstens eine Erfassungsinformation und/oder die Transferinformation und/oder die Ergebnisinformation zwischen zu speichern. Darüber hinaus kann die Transferinformation auch dauerhaft (nicht-flüchtig) in einen Datenspeicher der Auswertevorrichtung gespeichert sein. Optional kann die Auswertevorrichtung zudem zur Ansteuerung und/oder zur Auswertung und/oder zur Bereitstellung elektrisch mit wenigstens einer Komponente des optischen Erfassungssystems verbunden sein, beispielsweise mit einer Detektionsvorrichtung. Auf diese Weise ist es möglich, dass die Auswertevorrichtung die Erfassungsinformationen von der Detektionsvorrichtung empfängt und z. B. in dem Zwischenspeicher oder in dem Datenspeicher hinterlegt.

Vorteilhafterweise kann die Bereitstellung der Erfassungsinformationen auch dadurch erfolgen, dass eine Detektionsvorrichtung des Erfassungssystems ein auf die Detektionsvorrichtung gerichtetes Licht aufzeichnet, wobei dieses Licht spezifisch ist für eine Veränderung eines Beleuchtungslichts durch die Probe und/oder abhängig ist von dem Beleuchtungsparameter. Der Beleuchtungsparameter ist z. B. eine Einstellung eines Beleuchtungswinkels des Beleuchtungslichts und/oder einer Beleuchtungsfarbe des Beleuchtungslichts und/oder einer Polarisation des Beleuchtungslichts und/oder einer räumlichen Eigenschaft (Struktur) des Beleuchtungslichts.

Ferner ist es denkbar, dass sich die Erfassungsinformationen zumindest hinsichtlich des Beleuchtungsparameters des Erfassungssystems voneinander kodiert, insbesondere polarisations- oder farbkodiert unterscheiden. Die farbkodierte Unterscheidung wird beispielsweise dadurch ermöglicht, dass für unterschiedliche Beleuchtungsparameter (oder auch eine unterschiedliche Beleuchtungsparametrisierung) eine unterschiedliche Beleuchtungsfarbe genutzt wird. Hierzu wird beispielsweise ein Beleuchtungsmittel genutzt, um eine Farbfilterung des Beleuchtungslichts in Abhängigkeit des Beleuchtungsparameters zu erzielen. Das Beleuchtungsmittel kann hierzu als räumlich strukturierter Farbfilter ausgeführt sein. Der Beleuchtungsparameter ist z. B. eine räumliche Struktur oder ein Winkel, welcher für unterschiedliche Erfassungsinformationen unterschiedlich eingestellt wird. So kann der Beleuchtungsparameter auch eine unterschiedliche Struktur des Beleuchtungslichts für unterschiedliche Erfassungsinformationen betreffen. Um das daraus resultierende Licht den unterschiedlichen Erfassungsinformationen zuzuordnen, kann entsprechend die Kodierung, z. B. Farbkodierung (d. h. eine Farbfilterung) oder Polarisationskodierung, genutzt werden. Auf diese Weise werden zur Bereitstellung unterschiedliche Beleuchtungseigenschaften, wie Beleuchtungsfarben oder Polarisationen, welche z. B. aus einer Aufzeichnung einer Detektionsvorrichtung erhalten werden können, unterschiedlichen Erfassungsinformationen zugeordnet. Die unterschiedlichen Beleuchtungseigenschaften können alternativ oder zusätzlich zur Beleuchtungsfarbe (der Farbkodierung) auch eine Polarisation des Beleuchtungslichts (der Polarisationskodierung) betreffen.

Außerdem ist es bei einem erfindungsgemäßen Verfahren optional möglich, dass die Erfassungsinformationen für eine Erfassung der Probe durch das optische Erfassungssystem spezifisch sind, bei welcher sich die Erfassungsparametrisierung für die Erfassungsinformationen unterscheidet. Alternativ oder zusätzlich kann sich die Erfassungsparametrisierung zumindest durch eine Variation eines Beleuchtungsparameters des Erfassungssystems unterscheiden. Die Variation ist beispielsweise eine Farbvariation oder eine unterschiedliche Polarisation eines Beleuchtungslichts, und wird insbesondere durch eine Auswertevorrichtung und/oder durch ein Beleuchtungsmittel gesteuert. Das Beleuchtungsmittel kann hierin z. B. als Farb- oder Polarisationsfilter ausgeführt sein.

Es kann bei der Erfindung vorgesehen sein, dass sich die Erfassungsinformationen zumindest hinsichtlich des Beleuchtungsparameters des Erfassungssystems voneinander kodiert unterscheiden. Die Kodierung erfolgt dabei insbesondere durch eine Veränderung wenigstens einer Eigenschaft des Beleuchtungslichts in vordefinierter Weise, um das so veränderte Beleuchtungslicht bei der Bereitstellung (insbesondere Erfassung) der Erfassungsinformationen von anderem Beleuchtungslicht unterscheiden zu können. Diese Veränderung, d. h. Kodierung, kann dann z. B. für verschiedene räumliche Positionen oder Bereiche des Beleuchtungslichts voneinander unterschiedlich und unterscheidbar erfolgen. Damit werden unterschiedliche Beleuchtungsmuster gebildet, welche sich voneinander zumindest anhand der Kodierung unterscheiden. Es kann sodann aus jedem der unterschiedlichen Beleuchtungsmuster bzw. für jede unterschiedliche Kodierung wenigstens eine der Erfassungsinformationen erzeugt werden, welche dann nur Informationen aus diesem Beleuchtungsmuster bzw. aus diesem entsprechend kodierten Beleuchtungslicht aufweist. Beispielsweise wird als Kodierung dabei eine unterschiedliche Polarisation des Beleuchtungslichts genutzt. Eine Aufzeichnung der Probe anhand dieses derart kodierten Beleuchtungslichts wird beispielsweise für die verschiedenen Polarisationen aufgetrennt, sodass für jede der unterschiedlichen Polarisationen eine Erfassungsinformation erzeugt wird. Dabei kann die unterschiedliche Polarisation (z. B. im Bereich eines Kondensors) vor der Beleuchtung der Probe durch das Beleuchtungslicht erfolgt. Es können die Erfassungsinformation unterschiedliche Informationen über die Probe aufgrund der unterschiedlichen Wege des Beleuchtungslichts im Erfassungssystem aufweisen. Die vorgenannte Ausführung gilt dabei auch für andere Kodierungsarten, wie die Farbkodierung.

Es kann dabei bei dem erfindungsgemäßen Verfahren von Vorteil sein, dass die Auswertung den Unterschied der Erfassungsinformationen nutzt, insbesondere für die Probe spezifische und/oder durch die Probe verursachte Unterschiede nutzt, um wenigstens eine daraus sich ergebene Information über die Probe wie die Ergebnisinformation zu erhalten. Dabei ist vorteilhafterweise der Strukturunterschied, also die unterschiedlichen Beleuchtungsmuster, welche zur Aufzeichnung unterschiedlicher der Erfassungsinformationen genutzt werden, für die Entstehung dieses Unterschieds entscheidend. Die unterschiedlichen Erfassungsinformationen können sich daneben z. B. hinsichtlich der Kodierung des Beleuchtungslichts unterscheiden, welches zur Aufzeichnung der Erfassungsinformationen genutzt wird. Es handelt sich dabei dann aber ggf. um einen vordefinierten Unterschied zur Kodierung und nicht um einen durch die Probe verursachten Unterschied. Die Kodierung kann sich dabei beispielsweise eine Farbkodierung oder Polarisation sein. Die Auswertung oder Bereitstellung wertet somit insbesondere die unterschiedliche Kodierung nicht im Sinne einer Information über eine Probeneigenschaft auf, um die Ergebnisinformation zu erhalten, sondern ggf. nur zur Dekodierung und zur Bereitstellung der Ergebnisinformationen. So werden z. B. unterschiedliche Farben einer Aufzeichnung einer Detektionsvorrichtung als Information zur Dekodierung durch die Auswertung oder Bereitstellung genutzt und ggf. nicht als eine spektrale Veränderung des Beleuchtungslichts durch die Probe.

Es ist denkbar, dass zeitlich vor der Auswertung das Bereitstellen (die Bereitstellung) der Erfassungsinformationen dadurch erfolgt, dass zur Dekodierung unterschiedliche Aufzeichnungen von (durch die Probe veränderten) Beleuchtungslicht durch eine Detektionsvorrichtung des Erfassungssystems durchgeführt werden, vorzugsweise gleichzeitig und/oder parallel, um jeweils eine unterschiedliche der Erfassungsinformationen anhand der jeweiligen Aufzeichnung zu bestimmen, wobei sich die Aufzeichnungen durch die Eigenschaften des Beleuchtungslichts unterscheiden.

Insbesondere erfolgt das Bereitstellen der Erfassungsinformationen derart, dass eine einzelne der Erfassungsinformationen keine Unterschiede des Beleuchtungsparameters und/oder der Eigenschaft des Beleuchtungslichts aufweist, also z. B. nur anhand Beleuchtungslicht einer einzigen Eigenschaft wie einer einzigen Farbe oder Polarisation erzeugt ist. Insbesondere können die Unterschiede nur für unterschiedliche der Erfassungsinformationen erkennbar sein.

Dabei ist es auch denkbar, dass mehrere Kodierungsarten, z. B. die Farb- und die Polarisationskodierung, kombiniert zum Einsatz kommen. Die unterschiedliche Polarisation des Beleuchtungslichts umfasst z. B. unterschiedliche Polarisationsarten (wie lineare und zirkulare Polarisation) oder unterschiedliche Polarisationsrichtungen oder unterschiedliche Polarisationsmuster oder auch den Einsatz von polarisierten und sich davon unterscheidenden unpolarisierten Beleuchtungslicht. Auch andere Eigenschaften des Beleuchtungslichts als die Farbe oder Polarisation können ggf. zur Kodierung genutzt werden.

Das Bereitstellen kann z. B. auch das Auslesen der Erfassungsinformationen initiiert durch das Auswertungsmittel von einem Datenspeicher oder einer Schnittstelle zum Erfassungssystem sein. Eine solche Schnittstelle kann beispielsweise eine Signalverbindung und/oder elektrische Verbindung zu einer Detektionsvorrichtung des Erfassungssystems aufweisen.

Es kann weiter möglich sein, dass zum Bereitstellen der nachfolgende Schritt vorgesehen ist:
- Durchführen zumindest einer Erfassung der Probe durch das optische Erfassungssystem, um die unterschiedlichen Erfassungsinformationen durch eine Variation des Beleuchtungsparameters zu erhalten,
wobei die Variation als eine Veränderung der räumlichen Beleuchtungsstruktur und/oder der Beleuchtungsfarbe und/oder der Beleuchtungspolarisation für die unterschiedlichen Erfassungsinformationen erfolgt, wobei vorzugsweise hierzu ein Beleuchtungslicht räumlich strukturiert und/oder zur Farbkodierung wenigstens zweifarbig und/oder zur Polarisationskodierung unterschiedlich polarisiert ist, sodass insbesondere farb- und/oder polarisationsabhängig verschiedene Beleuchtungsmuster erzeugt werden, und bevorzugt diese Beleuchtungsmuster für die Erfassungsinformationen spezifisch sind. Insbesondere können die durch die Probe veränderten Beleuchtungsmuster (welche das Erfassungssystem und/oder die Probe durchlaufen haben) durch die Erfassungsinformationen erfasst werden. Diese enthalten entsprechend die relevanten Informationen über die Probe. Dies hat den Vorteil, dass durch die Variation des Beleuchtungsparameters unterschiedliche Erfassungsinformationen bereitgestellt werden können, um durch die Auswertung, insbesondere eine Verarbeitung der Erfassungsinformationen, den Informationsgehalt der Probenerfassung zu erhöhen. Insbesondere erfolgt dabei die Variation der Beleuchtungsfarbe zur Farbkodierung oder der Polarisation zur Polarisationskodierung des Beleuchtungslichts, um auf diese Weise anhand der Beleuchtungsfarbe oder der Polarisation die Erfassungsinformationen extrahieren zu können. Die räumliche Strukturierung des Beleuchtungslichts erfolgt insbesondere zur Erhöhung des Informationsgehalts, da auf diese Weise das Beleuchtungslicht in unterschiedlicher Weise das optische Erfassungssystem durchlaufen kann. Auf diese Weise kann z. B. ein (ggf. farbliches) Multiplexing bereitgestellt werden, um mehrere Bilder der Probe gleichzeitig und/oder parallel aufzunehmen. Die Bilder entsprechen dabei beispielsweise den Erfassungsinformationen.

Bei geeigneter Formung der Beleuchtungsmuster durch die Beleuchtungsstruktur können so z. B. mehrere Bilder der Probe parallel mit einem optischen Erfassungssystem und ohne zeitlichen Verlust aufgenommen werden. Dabei ist es denkbar, dass die optischen Eigenschaften des optischen Erfassungssystems (d. h. insbesondere des abbildenden Mikroskopsystems) abhängig sind von der Lichtfarbe des Beleuchtungslichts, beispielsweise über chromatische Aberrationen. Grundsätzlich ist es dabei denkbar, dass das optische Erfassungssystem beziehungsweise dessen optische Eigenschaften moduliert werden und auf Grundlage dieses physikalischen Modells ein zusätzlicher Informationsgewinn bei der Probenerfassung möglich ist. Durch die Nutzung der angelernten Transferinformationen, und insbesondere auch in Kombination mit selbstlernenden Auswertungsverfahren, kann gegebenenfalls auf solche Modellbildung zumindest teilweise verzichtet werden, wobei dennoch der Informationsgewinn möglich ist oder verbessert wird. Auch kann gegebenenfalls auch diese Weise die Einschränkung überwunden werden, dass bei physikalischen Modellen nur solche Informationen anhand der Erfassungsinformationen extrahierbar sind, für die es im physikalischen Modell eine Entsprechung gibt. Ferner sind solche Verfahren grundsätzlich darauf angewiesen, dass das reale System dem Modell zu einem guten Grad entspricht. Die Nutzung der angelernten Transferinformationen kann dabei gegebenenfalls so verstanden werden, dass das Modell automatisch mittels künstlicher Intelligenz generiert wird. Auch kann die Auswertung der Erfassungsinformationen gegebenenfalls eine selbstlernende Objekt- oder eine selbstlernende Zellanalyse bei der Probe umfassen, um anhand des Unterschieds der Erfassungsinformationen zusätzliche Informationen über die Probe zu gewinnen.

Es ist ferner bei dem erfindungsgemäßen Verfahren denkbar, dass das Beleuchtungslicht so kodiert ist, z. B. mindestens zweifarbig oder polarisiert, und/oder räumlich so strukturiert ist, dass kodierungsabhängig, d. h. beispielsweise farbabhängig und/oder polarisationsabhängig, verschiedene Beleuchtungsmuster auftreten. Dabei können gegebenenfalls verschieden farbige und/oder polarisierte Beleuchtungsmuster das optische Erfassungssystem auf verschiedene Weise durchlaufen und dadurch unterschiedliche Aufnahmen, d. h. die unterschiedlichen Erfassungsinformationen erzeugen. Unter unterschiedlichen Farben werden insbesondere unterschiedliche Wellenlängenbereiche verstanden.

Vorteilhafterweise handelt es sich bei unterschiedlichen Farben insbesondere um solche Wellenlängen des Beleuchtungslichts, welche sich mindestens um 10nm oder mindestens um 20nm oder mindestens um 50nm oder mindestens um 100nm oder mindestens um 200nm unterscheiden. Auch kann es sich bei solchen unterschiedlichen Farben um solche Wellenlängenbereiche handeln, welche wenigstens um 10nm oder mindestens um 20nm oder mindestens um 50nm oder mindestens um 100nm oder mindestens um 200nm beabstandet voneinander sind. Somit kann ein wenigstens zweifarbiges Beleuchtungslicht z. B. räumlich so strukturiert sein, dass es räumlich unterschiedliche Farben und/oder unterschiedliche Spektren aufweist. Insbesondere kann dabei die Farbe und/oder das Spektrum des Beleuchtungslichts orthogonal zur Ausbreitungsrichtung des Beleuchtungslichts im optischen Erfassungssystem räumlich variieren. In anderen Worten weist ein mehrfarbiges Beleuchtungslicht mehrere Farben (d. h. insbesondere mehrere unterschiedliche Spektren gemäß z. B. den oben genannten Wellenlängenbereichenabständen) auf, welche bei einer räumlichen Strukturierung gegebenenfalls räumlich unterschiedlich beim Beleuchtungslicht vorgesehen sind. Gemäß einer anderen Betrachtungsweise kann das Beleuchtungslicht als mehrere Lichtstrahlen unterschiedlicher Lichtfarbe aufgefasst werden, welche entsprechend unterschiedliche Wege im optischen Erfassungssystem nehmen.

Es ist denkbar, dass bei jeder Erfassungsinformation zumindest teilweise der gleiche räumliche Probenbereich erfasst ist. In anderen Worten kann eine erste der Erfassungsinformationen (nur teilweise) eine andere Information aufweisen als eine zweite der Erfassungsinformationen, sodass der Informationsgehalt insgesamt erhöht werden kann. Bei den Erfassungsinformationen handelt es sich z. B. um (ggf. unabhängige) Aufzeichnungen (z. B. Mikroskopbilder) der gleichen Probenstelle. Beispielsweise ist die jeweilige Erfassungsinformation spezifisch und/oder abhängig für eine jeweilige Aufzeichnung und entspricht beispielsweise denen von einer Detektionsvorrichtung ausgegebenen Daten.

Vorteilhafterweise sind die unterschiedlichen Erfassungsinformationen spezifisch für verschiedenfarbige und/oder unterschiedlich polarisierten Beleuchtungsmuster, wobei insbesondere sich die Erfassungsinformationen hinsichtlich der Farben oder Polarisation der Beleuchtungsmuster unterscheiden. Die verschiedenen Beleuchtungsmuster werden beispielsweise durch eine Veränderung des Beleuchtungslichts des optischen Erfassungssystems hervorgerufen, wobei die Veränderung das Beleuchtungslicht mindestens zweifarbig und/oder mindestens dreifarbig und/oder räumlich so strukturiert ist, dass farb- oder polarisationsabhängig die verschiedenen Beleuchtungsmuster auftreten. Somit können die (z. B. verschiedenfarbigen) Beleuchtungsmuster das optische Erfassungssystem auf verschiedene Weise durchlaufen und so unterschiedliche Aufnahmen erzeugen. Eine Detektionsvorrichtung, insbesondere eine Kamera, kann dabei von einer Art sein, das sie zwei oder drei oder mehr farblich getrennte Aufnahmen bei dem Erfassungssystem erzeugen kann. Insbesondere werden bei der Erfassung die Aufnahmen aus den verschiedenen Farbbereichen oder unterschiedlichen Polarisationen getrennt gehalten. Anschließend kann gegebenenfalls die Auswertung erfolgen, z. B. ein trainiertes neuronales Netz auf die Aufnahmen angewendet werden. Die Aufnahmen entsprechen dabei insbesondere den unterschiedlichen Erfassungsinformationen. Die Auswertung kann z. B. mit dem Ziel erfolgen, dass aus den Aufnahmen und/oder den Erfassungsinformationen eine Klassifizierung oder Regression von Pixeln, Objekten, Probenbereichen oder ganzen Proben vorgenommen wird. Es kann möglich sein, dass das neuronale Netz zuvor an Aufnahmen ähnlicher Art trainiert wurde, um die entsprechende Klassifizierung oder Regression vorzunehmen.

Insbesondere kann es möglich sein, dass die Auswertung ein neuronales Netz nutzt, das anhand ähnlicher Bilddaten (z. B. den Erfassungsinformationen) unabhängig von einem physikalischen Modell zunächst überwacht und/oder selbstständig lernt, wie die relevanten Informationen aus den vorhandenen, im Allgemeinen abstrakten Informationen der Bilddaten beziehungsweise Farbbilder zu extrahieren sind. Dafür können gegebenenfalls dem neuronalen Netz in einem ersten Schritt sowohl die abstrakten Informationen der aufgenommenen Bilddaten beziehungsweise Farbbilder (d. h. insbesondere der Erfassungsinformationen), sowie vorzugsweise die dazugehörige relevante Information an dieser Stelle der Probe (wie Markierungen relevanter Bereiche oder die dreidimensionale Struktur der Probe) präsentiert werden. Auf diese Weise kann z. B. ein abstraktes Modell für den Transfer aus den abstrakten Informationen in die relevanten Informationen erlernt werden. Beispielsweise ist dabei die Transferinformation spezifisch für dieses abstrakte Modell, welches wesentlich anpassungsfähiger und/oder flexibler sein kann als ein realistisches physikalisches Modell und ferner auch ohne die Notwendigkeit für besondere Annahmen an das optische System erlernt werden kann. Gegebenenfalls kann in einem weiteren Verfahrensschritt das gelernte Modell verwendet werden, um aus unbekannten Bilddaten beziehungsweise Farbbildern mit vergleichbaren abstrakten Informationen die gewünschten relevanten Informationen zu extrahieren.

Es ist im Rahmen der Erfindung möglich, dass bei der Nutzung einer Kodierung, wie der Farbkodierung oder Polarisationskodierung, jede Kodierung (wie z. B. eine genutzte Farbe der Polarisierung) des Beleuchtungslichts einem bestimmten durch die räumliche Strukturierung eines Beleuchtungsmittels hervorgerufenen Beleuchtungsmuster und/oder einem bestimmten Beleuchtungswinkel des Beleuchtungslichts zugeordnet ist, wobei sich die Beleuchtungsmuster bzw. Beleuchtungswinkel voneinander unterscheiden. Beispielsweise unterscheiden sich die Beleuchtungswinkel wenigstens um 5 ° oder 10 ° oder 20 ° (z. B. in Bezug auf einen Einfallswinkel auf die Probe oder einem Ausfallswinkel vom Kondensor oder Beleuchtungsmittel). Es ist dabei denkbar, dass die Beleuchtung der Probe gleichzeitig und/oder parallel mit sämtlichen Kodierungen, wie Beleuchtungsfarben oder Polarisationen erfolgt (und damit auch mit sämtlichen unterschiedlichen Beleuchtungsmustern und/oder Beleuchtungswinkeln) oder sequentiell nur einzelne Kodierungen (z. B. Beleuchtungsfarben oder Polarisationen) bzw. Beleuchtungswinkel nacheinander die Probe beleuchten, und somit sequentiell die Erfassungsinformationen erfasst werden.

Ferner ist es optional vorgesehen, dass die Auswertung durch ein Auswertungsmittel durchgeführt wird, welches als ein auf Maschinenlernen und/oder Deep Learning und/oder künstlicher Intelligenz basiertes Computerprogramm ausgeführt ist, vorzugsweise als künstliches neuronales Netz. Es ist möglich, dass die Auswertung unabhängig von einem konkreten physikalischen Modell des optischen Erfassungssystems durchgeführt wird, z. B. auf Grundlage lernender und insbesondere auch selbstlernender Verfahren. Beispielsweise kann die Transferinformation dabei auf ein Anlernergebnis, wie einen Klassifikator oder ein Modell, basieren, welches durch ein zumindest teilweise überwachtes und/oder unüberwachtes Lernen entstanden ist. Damit kann die Auswertung auf Zusammenhänge und Modelle basieren, welche nicht vorgegeben werden müssen und somit automatisiert generiert werden können.

Besonders vorteilhaft ist es, wenn bei dem Anlernen Methoden des Deep Learning zum Einsatz kommen. Entsprechend kann die Transferinformation für solche Methoden des Deep Learning spezifisch sein. Insbesondere handelt es sich bei diesen Methoden um Optimierungsmethoden künstlicher neuronaler Netze, die zahlreiche Zwischenlagen (engl. hidden layers) zwischen Eingabeschicht und Ausgabeschicht haben und dadurch eine umfangreiche innere Struktur aufweisen.

Es kann ferner möglich sein, dass die Erfassungsparametrisierung der Erfassungsinformationen sich dadurch voneinander unterscheidet, dass bei einer Erfassung der Erfassungsinformationen ein, insbesondere breitbandiges, Beleuchtungslicht des Erfassungssystems für unterschiedliche der Erfassungsinformationen unterschiedliche räumliche und/oder kodierte Anpassungen aufweist, vorzugsweise durch eine räumliche Strukturierung und/oder Farbkodierung und/oder Polarisation des Beleuchtungslichts. Insbesondere beruht diese Weiterentwicklung auf dem Gedanken, dass Licht verschiedener Kodierung, z. B. Licht verschiedener Farben ein identisches optisches System unabhängig voneinander durchläuft. Bei geeigneter Formung der verschiedenen Kodierungen, und/oder bei verschiedenen Beleuchtungsfarben ggf. allein durch die chromatische Abberationen des optischen Systems (d. h. des Erfassungssystems) können für verschiedene Kodierungen (wie Farben oder Polarisationen) unterschiedliche optische Abbildungen (z. B. die Erfassungsinformationen) erzeugt werden. Durch eine geeignete Detektionsvorrichtung, z. B. einem Detektor wie einer digitalen Farbkamera mit Polarisations- und/oder Farbfiltersensor, vorzugsweise Bayersensor, können dann mehrere Bilder mit verschiedener Kodierung unabhängig oder teilweise unabhängig voneinander parallel aufgenommen werden. Ein Satz dieser Bilder kann dann z. B. als Polarisations- und/oder Farbbild vorgehalten werden. Während für wenige spezielle Beleuchtungssituationen, z. B. schräge Beleuchtung mit mehreren verschiedenen Winkeln, bekannt ist, dass ein Satz der aufgenommenen Bildern mehr Informationen beinhaltet als ein einzelnes Bild und insbesondere, wie diese Informationen konkret zu interpretieren sind, würdigt die erfindungsgemäß mögliche Nutzung verschiedener Kodierungen wie Beleuchtungsfarben, dass der Informationsgewinn praktisch immer vorhanden ist, wenn die Beleuchtung kodiert (z. B. farblich) strukturiert ist. Durch eine kodierte Formung, insbesondere farbliche Formung der Beleuchtung findet also eine Maximierung der Bildinformationen statt, die dann in einem kodierten Bild, z. B. Farbbild vorgehalten werden kann. Aus diesem kodierten Bild können dann z. B. die Erfassungsinformationen extrahiert werden.

Außerdem ist es von Vorteil, wenn die unterschiedliche Erfassungsparametrisierung der Erfassungsinformationen dafür spezifisch ist, dass bei einer Erfassung eine Anpassung eines Beleuchtungslichts mittels eines Beleuchtungsmittels des Erfassungssystems durchgeführt wird, wobei das Beleuchtungsmittel eine kodierte, vorzugsweise unterschiedlich polarisierende und/oder mindestens zweifarbige, räumliche Struktur aufweist, um kodierungsabhängig, vorzugsweise farbabhängig und/oder farbkodiert und/oder polarisationsabhängig und/oder polarisationskodiert, verschiedene Beleuchtungsmuster für die Probe bereitzustellen, wobei insbesondere für unterschiedliche der Beleuchtungsmuster unterschiedliche der Erfassungsinformationen bereitgestellt werden. Die verschiedenen und insbesondere verschiedenfarbigen oder verschiedenpolarisierte Beleuchtungsmuster durchlaufen das optische System auf verschiedene Weise und erzeugen dadurch unterschiedliche Erfassungsinformationen (z. B. Bildaufzeichnungen). Dadurch können unterschiedliche Aufnahmen erzeugt werden, wobei eine Detektionsvorrichtung (wie eine Kamera) hierzu zwei oder mehr farblich oder hinsichtlich der Kodierung bzw. Polarisation getrennte Aufnahmen erzeugen kann. Die Aufnahmen aus den verschiedenen Kodierungen, insbesondere Farbbereichen, können dabei getrennt gehalten werden.

Um eine Polarisationskodierung und/oder Farbkodierung zu erhalten, insbesondere um eine polarisationskodierte und/oder farbkodierte strukturierte Beleuchtung mit Beleuchtungsmustern zu erhalten, kann das Beleuchtungsmittel z. B. in einen Strahlengang des Beleuchtungslichts (Beleuchtungspfad) angeordnet sein. Beispielsweise ist das Beleuchtungsmittel als Farbfilter ausgeführt. Das Beleuchtungsmittel kann ggf. auch in einer Fourierebene der Probe im Beleuchtungspfad oder im Detektionspfad eingebracht werden. Beispielsweise beleuchtet das breitbandiges Beleuchtungslicht die Probe und wird erst dann - durch die Probe verändert - im Detektionspfad farbkodiert. Auch kann das Beleuchtungsmittel als Polarisationsfilter ausgeführt sein.

Beispielsweise durchtritt zum Bereitstellen der Erfassungsinformationen das (beispielsweise breitbandige und/oder unpolarisierte) Beleuchtungslicht das Beleuchtungsmittel, wird hierdurch kodiert (polarisiert oder farblich gefiltert) und beleuchtet anschließend die Probe und wird erst dann - durch die Probe verändert - durch die Detektionsvorrichtung aufgezeichnet.

Auch ist es optional denkbar, dass die unterschiedliche Erfassungsparametrisierung der Erfassungsinformationen dafür spezifisch ist, dass eine Erfassung der Erfassungsinformationen durch eine gleichzeitige und/oder parallele Beleuchtung mit verschiedenen Beleuchtungsfarben (wie Lichtfarben oder Wellenlängen) und/oder Polarisationen erfolgt, wobei wenigstens eine farbabhängige und/oder polarisationsabhängige, insbesondere zwei- oder mehrdimensionale, Probenaufzeichnung durchgeführt wird, um die wenigstens zwei Erfassungsinformationen farb- und/oder polarisationsabhängig bereitzustellen. Die Probenaufzeichnung kann z. B. mehrdimensional sein, und zur schnellen und zuverlässigen Erfassung gleichzeitig und/oder parallel durch wenigstens einen Filter, wie einen Polarisations- und/oder Farbfilter, bei einer Detektionsvorrichtung mehrere Aufzeichnen generiert werden. Es kann sich dabei bei den Aufzeichnungen um Erfassungsinformationen unterschiedlich gefilterten Beleuchtungslichts handeln.

Des Weiteren ist es im Rahmen der Erfindung optional möglich, dass zum Bereitstellen wenigstens eine Probenaufzeichnung durch eine Detektionsvorrichtung, insbesondere Kamera, des Erfassungssystems mittels Polarisations- und/oder Farbfilterung durchgeführt wird, um unterschiedliche der Erfassungsinformationen für unterschiedliche Polarisationen und/oder Beleuchtungsfarben aus der Probenaufzeichnung zu erhalten, wobei vorzugsweise die Detektionsvorrichtung zur Polarisationsfilterung wenigstens einen Polarisationsfilter und/oder zur Farbfilterung einen Farbfilter, insbesondere ein Farbfiltermuster und/oder RGB-Filtermuster und/oder Bayerfilter aufweist. Der Polarisations- und/oder Farbfilter kann z. B. auf einem Array von Sensorelementen, wie Photodioden oder dergleichen, angeordnet sein. Dabei kann die wenigstens eine Farbfilterung, insbesondere auch mehrere Farbfilterungen bei einem Farbfiltermuster, ggf. auch nicht-sichtbares Licht (im nicht-sichtbaren Spektrum) betreffen. Damit ist eine einfache und zuverlässige Bereitstellung der Erfassungsinformationen in Abhängigkeit von der Filterung der Detektionsvorrichtung möglich.

Es ist außerdem möglich, dass eine Detektionsvorrichtung einen polarisationsempfindlichen (polarisationssensitiven) Sensor aufweist, insbesondere zur Aufzeichnung des (durch die Probe veränderten) Beleuchtungslichts und/oder zur Erfassung (Bereitstellung) der Erfassungsinformationen. Das von der Probe veränderte Beleuchtungslicht ist z. B. durch die Transmission durch die Probe verändert, z. B. räumlich unterschiedlich abgeschwächt. Solche Veränderungen können durch den Sensor erfasst werden. Um außerdem unterschiedlich polarisiertes Beleuchtungslicht voneinander zu unterscheiden, welche zuvor z. B. durch ein Beleuchtungsmittel polarisiert wurde, kann z. B. der polarisationsempfindliche Sensor Beleuchtungslicht unterschiedlicher Polarisationen voneinander separiert und/oder unterscheidbar erfassen. Hierzu können z. B. Polarisationsfilter vorgesehen sein, welche jeweils wenigstens einem Pixel zugeordnet sind. Es kann sich bei dem Sensor z. B. um einen CMOS oder CCD Sensor handeln, welcher zusätzlich wenigstens einen Polarisationsfilter aufweist. Dieser wenigstens eine Polarisationsfilter ist z. B. direkt am Sensorchip befestigt. Beispielsweise ist der Polarisationsfilter zwischen wenigstens einer Fotodiode des Sensors und wenigstens einer Mikrolinse des Sensors angeordnet, um durch die Mikrolinse hindurchtretendes Licht zu filtern, und dann zur Fotodiode gefiltert weiterzuleiten. Damit kann die Fotodiode nur Licht bestimmter Polarisation erfassen, welches dann zur Erzeugung einer bestimmten Erfassungsinformation für diese Polarisation genutzt werden kann. Für anderen Polarisationen können entsprechend andere Polarisationsfilter und Erfassungsinformationen bei weiteren Fotodioden genutzt werden.

Ferner ist es optional vorgesehen, dass zum Bereitstellen die nachfolgenden Schritte durchgeführt werden:
- Ermitteln einer ersten Aufnahme eines Bereichs der Probe, vorzugsweise mit einer ersten Beleuchtungsfarbe und/oder Polarisation, um eine erste Erfassungsinformation gemäß einer ersten Erfassungsparametrisierung zu erhalten,
- Ermitteln wenigstens einer zweiten Aufnahme eines zumindest teilweise gleichen Bereichs der Probe, vorzugsweise mit wenigstens einer zweiten Beleuchtungsfarbe und/oder Polarisation, welche sich von der ersten Beleuchtungsfarbe und/oder Polarisation unterschiedet, um wenigstens eine zweite Erfassungsinformation gemäß wenigstens einer zweiten Erfassungsparametrisierung zu erhalten,
wobei vorzugsweise das Ermitteln der Aufnahmen parallel gemäß einem kodierten und/oder farblichen Multiplexing erfolgt. Auf diese Weise ist es z. B. auch möglich, eine räumliche Kodierung z. B. als räumliche Variation der Beleuchtungspolarisation zu nutzen. Dies kann die gleichen Vorteile haben, wie sie auch im Zusammenhang mit einem farbkodierten Multiplexing beschrieben sind. Insbesondere können gleichzeitig und/oder parallel mehrere kodierte Erfassungsinformationen über die Probe auf diese Weise erfasst werden, sodass eine sequentielle Beleuchtung der Probe für die unterschiedlichen Kodierungen nicht notwendig ist.

Optional kann es möglich sein, dass die vorgenannten Schritte für weitere (z. B. dritte, vierte, usw.) Aufnahmen und Erfassungsinformationen wiederholt werden, wobei ggf. sämtliche Erfassungsinformationen z. B. als ein einziger Datensatz in der Form von Anwendungsdaten vorliegen. Die Schritte können beispielsweise gleichzeitig und/oder parallel oder sequentiell durchgeführt werden.

Ferner kann es im Rahmen der Erfindung vorgesehen sein, dass die Auswertung durch ein Auswertungsmittel durchgeführt wird, welches die Transferinformation aufweist, wobei zum Anlernen (d. h. insbesondere Training) des Auswertungsmittels die nachfolgenden Schritte durchgeführt werden:
- Durchführen einer Erfassung eines Bereichs der Probe durch das oder ein weiteres optisches Erfassungssystem, um wenigstens zwei unterschiedliche Anlerninformationen über die Probe dadurch zu erhalten, dass für die Anlerninformationen wenigstens ein Erfassungsparameter, insbesondere Beleuchtungsparameter, variiert,
- Bestimmen von Anwendungsdaten für das Auswertungsmittel anhand der Anlerninformationen,
- Durchführen einer Referenzerfassung des gleichen Bereichs der Probe durch das oder das weitere optische Erfassungssystem, und/oder einer (automatisierten) Verarbeitung, um ein Ground Truth (z. B. als eine vorgegebene Lösung bzw. als eine Vorgabe für die Ergebnisinformation) für das Auswertungsmittel zu bestimmen,
- Anlernen des Auswertungsmittels unter Verwendung der Anwendungsdaten und des
   Ground Truth, um die Transferinformation zu bestimmen.

Es ist möglich, dass zur Referenzerfassung eine Fluoreszenzmikroskopie und/oder für die Bestimmung des Ground Truth eine Segmentierung einer Aufzeichnung der Referenzerfassung durchgeführt wird. Beispielsweise kann das Erfassungssystem, insbesondere Mikroskop, zur Erfassung des Ground Truth genutzt werden. Es kann ferner möglich sein, dass die Anlerninformationen den Erfassungsinformationen inhaltlich entsprechen, sodass das Anlernverfahren auf Informationen in der Art der Erfassungsinformationen angepasst wird. Weiter kann das Anlernverfahren auch ein selbstlernendes Verfahren nutzen, um die Anlernung anhand probenspezifische Merkmale durchzuführen.

Es ist denkbar, dass der Ground Truth aus zytometrischen oder histologischen Analyseergebnisses bestimmt wird, welche anhand der Referenzerfassung ermittelt wurden. Alternativ oder zusätzlich ist es denkbar, dass der Ground Truth auch rechnerisch ermittelt wird, ggf. ohne dass eine Referenzerfassung durchgeführt wird.

Ferner ist es optional vorgesehen, dass die Probe eine gefärbte Objekt- oder Zellprobe ist, wobei die Auswertung für Erfassungsinformationen über diese Probe eine Detektion, insbesondere Segmentierung oder Lokalisierung dieser Objekte und/oder Zellen der Probe, durchführt. In anderen Worten kann die Erfassung der Färbung durch die Auswertung erfolgen. Auch kann die Auswertung für die Färbung der Probe sensitiv ausgeführt sein.

Darüber hinaus ist es bei einem erfindungsgemäßen Verfahren möglich, dass der Ground Truth durch eine automatisierte Erfassung, insbesondere einer automatisierten Durchführung der Referenzerfassung, bestimmt wird. Hierbei kann ggf. auch eine motorisierte Probenpositionierung, z. B. mittels eines motorisierten und in drei orthogonale Richtungen bewegbaren Probentisches, erfolgen. Die Probenpositionierung erfolgt dabei beispielsweise automatisiert gesteuert durch ein Computerprogramm. Damit kann eine schnelle und zuverlässige Ermittlung des Ground Truth stattfinden. Da ein Verfahren dieser Art ohne eine sonst häufig notwendige manuelle Annotation auskommt, kann es als selbstlernend beschrieben/verstanden werden.

Ferner kann auch das Bereitstellen der wenigstens zwei unterschiedlichen Erfassungsinformationen dadurch erfolgen, dass eine oder mehrere Ebenen der Probe aufgezeichnet werden. Hierbei kann ggf. auch eine motorisierte Probenpositionierung, z. B. mittels eines motorisierten und in drei orthogonale Richtungen bewegbaren Probentisches, erfolgen. Bspw. kann ein schrittweises Verschieben der Probe und/oder eines Objektives des Erfassungssystems erfolgen, um verschiedene Ebenen der Probe (z. B. in z-Richtung der Probe, insbesondere in Ausbreitungsrichtung des Beleuchtungslichts bei der Probe) zu erfassen.

Es ist vorteilhafterweise vorgesehen, dass ein erfindungsgemäßes Verfahren probenspezifisch ausgeführt ist, sodass sich das Verfahren nur für die Auswertung, insbesondere Analyse, einer bestimmten Probenart eignet (wie z. B. für Blutabstriche). Auf diese Weise können gezielt probenspezifische optische Eigenschaften genutzt werden. In anderen Worten kann das Verfahren an eine konkrete Probenart angepasst sein, oder auf eine bestimmte Probenart (Probentyp) antrainiert sein.

Es ist ferner bei einem erfindungsgemäßen Verfahren optional möglich, dass die Ergebnisinformation, und/oder ein Ground Truth zum Anlernen eines Auswertungsmittels, eine Vorhersage einer Zell- oder Zellklumpenentwicklung in der Zeit betrifft. Damit ist es möglich, eine solche Entwicklung auf Basis einer kurzen zeitlichen Entwicklung oder der Anfangsmorphologie bei der Probe vorherzusagen. Beispielsweise kann hierzu die Probe, insbesondere als eine Zellprobe, zunächst von einem bestimmten Zeitpunkt an zeitlich beobachtet werden. Diese Beobachtung kann z. B. durch die zeitlich wiederholte Bereitstellung von Erfassungsinformationen erfolgen. In anderen Worten ist es auch grundsätzlich bei einem erfindungsgemäßen Verfahren denkbar, dass die Erfassungsinformationen zu unterschiedlichen Zeitpunkten erfasst werden, und sich hinsichtlich dieses Zeitpunkts unterscheiden. Mittels der Auswertung kann dann gegebenenfalls die Vorhersage ermittelt werden. Gemäß dieser oder einer derartigen Methode (der Bereitstellung der Erfassungsinformationen als Anlerninformationen und/oder der beschriebenen Auswertung) kann zuvor gegebenenfalls der Ground Truth ermittelt werden. Zum Anlernen des Auswertungsmittels werden z. B. zeitlich nacheinander und wiederholt Erfassungsinformationen erfasst und hierdurch bereitgestellt, um die Anwendungsdaten für das Auswertungsmittel zu bestimmen. Zu einem späteren Zeitpunkt kann dann eine Referenzerfassung bei der gleichen Probe durchgeführt werden, bei welcher auch die Erfassungsinformationen erfasst wurden. Durch die Referenzerfassung kann dann der Ground Truth bestimmt werden, welcher zum Anlernen des Auswertungsmittels und zum Bestimmen der Transferinformation genutzt werden kann. Die hierdurch bestimme Transferinformation kann dann auch zur Vorhersage bei anderen Proben desselben Typs genutzt werden.

Ein weiterer Vorteil im Rahmen der Erfindung ist erzielbar, wenn die Ergebnisinformation, und/oder ein Ground Truth zum Anlernen eines Auswertungsmittels, eine der nachfolgenden Informationen über die Probe ist:
- eine Detektion, insbesondere Segmentierung oder Lokalisierung von Objekten und/oder Zellen der Probe, insbesondere eine Segmentierungsmaske,
- eine Schätzung der Klassifizierung oder Regression von Pixel oder Objekten oder Probenbereichen der Probe,
- ein zytometrisches oder histologisches Analyseergebnis (z. B. für den Ground Truth gewonnen mit etablierten Methoden der Probenanalyse beispielsweise High Content Analyse),
- eine Phaseninformation (z. B. für den Ground Truth aus einer komplementären, etablierten Methode zur Phasenmessung),
- eine dreidimensionale Information über die räumliche Struktur der Probe (z. B. ist der Ground Truth eine z-Stapel-Aufnahme),
- wenigstens eine Fluoreszenzeigenschaft der Probe (z. B. ist der Ground Truth wenigstens ein Fluoreszenzbild der Probe),
- ein erweiterter Schärfetiefenbereich einer Probenaufzeichnung (z. B. ist der Ground Truth ein entsprechendes Bild mit erweitertem Schärfetiefenbereich der Probe).

Damit ist ein vielseitiger und flexibler Einsatz des erfindungsgemäßen Verfahren möglich.

In einer weiteren Möglichkeit kann vorgesehen sein, dass zur kodierten Unterscheidung der Erfassungsinformationen, insbesondere bei dem Bereitstellen, eine Veränderung eines Beleuchtungslichts, vorzugsweise durch ein Beleuchtungsmittel, bei dem Erfassungssystem durchgeführt wird, vorzugsweise eine räumliche Variation einer Beleuchtungspolarisation und/oder einer Beleuchtungsfarbe des Beleuchtungslichts, welche bevorzugt einer unterschiedlichen Beleuchtungsstruktur des Beleuchtungslichts zugeordnet wird, und/oder dass die Transferinformation für diese Unterscheidung spezifisch ist. Somit ist ein Multiplexing denkbar, bei welchem gleichzeitig die Beleuchtung zur Erfassung mehrerer Erfassungsinformationen durchgeführt werden kann.

Ebenfalls Gegenstand der Erfindung ist ein optisches Erfassungssystem. Hierbei ist vorgesehen, dass das Erfassungssystem nachfolgende Komponenten aufweist:
- eine Detektionsvorrichtung zur Erfassung von wenigstens zwei unterschiedlichen Erfassungsinformationen über die Probe, welche sich wenigstens hinsichtlich eines Beleuchtungsparameters bei der Erfassung insbesondere kodiert unterscheiden,
- eine Auswertevorrichtung, wie einen Computer, insbesondere mit wenigstens einem Prozessor, die oder der geeignet ist, anhand einer maschinell angelernten Transferinformation aus den Erfassungsinformationen eine Ergebnisinformation über die Probe zu bestimmen.

Damit bringt das erfindungsgemäße optische Erfassungssystem die gleichen Vorteile mit sich, wie sie ausführlich mit Bezug auf ein erfindungsgemäßes Verfahren beschrieben worden sind. Zudem kann das optisches Erfassungssystem geeignet sein, ein erfindungsgemäßes Verfahren durchzuführen.

Darüber hinaus kann die Auswertevorrichtung eine Eingabevorrichtung, wie ein Touchscreen oder wenigstens eine Taste, aufweisen um z. B. die Auswertung zu initiieren. Bei der Auswertevorrichtung kann ferner eine Speichereinheit vorgesehen sein, um wenigstens das Auswertungsmittel, z. B. als wenigstens ein Computerprogramm, nicht-flüchtig zu speichern, und/oder um die Erfassungsinformationen zumindest zwischen zu speichern. Ein oder mehrere Prozessoren der Auswertevorrichtung können dazu geeignet sein, ein Computerprogramm wie das Auswertungsmittel auszuführen, um wenigstens einen Verfahrensschritt eines erfindungsgemäßen Verfahrens durchzuführen.

Von weiterem Vorteil kann vorgesehen sein, dass ein Beleuchtungsmittel vorgesehen ist, welches für mindestens zwei unterschiedliche Einstellungen des Beleuchtungsparameters eine unterschiedlich polarisierende und/oder mindestens zweifarbige räumliche Struktur aufweist, vorzugsweise wenigstens zwei (insbesondere in einer zur Richtung der Lichtausbreitung der Beleuchtung orthogonalen Ebene) benachbart angeordnete Polarisations- und/oder Farbfilter aufweist, um polarisations- und/oder farbabhängig verschiedene Beleuchtungsmuster bereitzustellen. Das Beleuchtungsmittel ist z. B. dazu ausgeführt, die Kodierung des Beleuchtungslichts abhängig von einer Position des Beleuchtungsmittels durchzuführen, um so die Beleuchtungsparameter in einfacher Weise zu variieren.

Ein weiterer Vorteil kann im Rahmen der Erfindung erzielt werden, wenn das Beleuchtungsmittel als ein Kondensoreinsatz ausgebildet ist, und zur Filterung eines Beleuchtungslichts in eine Kondensoreinheit des optischen Erfassungssystems eingesetzt ist, um eine Kodierung, insbesondere Polarisations- und/oder Farbkodierung des Beleuchtungslichts bereitzustellen. Damit kann das Beleuchtungslicht durch eine einfache Erweiterung eines Erfassungssystems kodiert und räumlich strukturiert werden. So kann es von Vorteil sein, wenn ein Erfassungssystem genutzt wird, welches zumindest überwiegend unabhängig von der genutzten Auswertung ausgebildet ist. Lediglich der Einsatz des Beleuchtungsmittels und/oder eine Anpassung der Detektionsvorrichtung und/oder der Auswertevorrichtung kann dabei ggf. zur Nutzung mit der Auswertung gemäß einem erfindungsgemäßen Verfahren ausreichend sein. Dies bringt eine deutliche Reduzierung des technischen Aufwands mit sich.

Vorteilhafterweise kann bei der Erfindung vorgesehen sein, dass die Detektionsvorrichtung wenigstens einen Kamerasensor aufweist, vorzugsweise einen RGB-Kamerasensor (RGB steht hierbei für Rot, Grün, Blau beispielsweise als mögliche Farbfilter des Kamerasensors), und/oder als eine polarisationssensitive Kamera ausgebildet ist, um vorzugsweise eine Dekodierung des Beleuchtungslichts durchzuführen. Es ist denkbar, dass durch die Detektionsvorrichtung eine Erfassung im Transmissionsmodus bei dem Erfassungssystem erfolgt, um die Erfassungsinformationen bereitzustellen. Alternativ oder zusätzlich kann die Detektionsvorrichtung dadurch zur Dekodierung des Beleuchtungslichts ausgeführt sein, dass die Detektionsvorrichtung ein Dekodierungsmittel aufweist, wie z. B. einen Farbfilter oder einen Polarisationsfilter.

Ebenfalls kann es im Rahmen der Erfindung vorteilhaft sein, eine numerische Apertur des Erfassungssystems (z. B. auf der Kondensorseite) zu erhöhen, insbesondere durch die Nutzung eines Objektivs. Insbesondere bei dünnen Proben hat dies den Vorteil, dass mehr Informationen aus der Probe extrahierbar sind und eine höhere Informationsdichte verfügbar ist.

Ferner kann im Rahmen der Erfindung vorgesehen sein, dass das optische Erfassungssystem als ein Mikroskopsystem zur Durchlichtmikroskopie ausgebildet ist, insbesondere um eine Probenauswertung im Transmissionsmodus durchzuführen.

Ebenfalls Gegenstand der Erfindung ist ein Computerprogramm, insbesondere Computerprogrammprodukt, umfassend Befehle, die bei der Ausführung des Computerprogramms durch einen Computer diesen veranlassen, die Schritte eines erfindungsgemäßen Verfahrens zumindest teilweise auszuführen. Damit bringt das erfindungsgemäße Computerprogramm die gleichen Vorteile mit sich, wie sie ausführlich mit Bezug auf ein erfindungsgemäßes Verfahren und/oder ein erfindungsgemäßes Erfassungssystem beschrieben worden sind. Außerdem kann das Computerprogramm geeignet sein, wenigstens einen Verfahrensschritt eines erfindungsgemäßen Verfahrens durch die Ansteuerung eines erfindungsgemäßen Erfassungssystems durchzuführen. Das Computerprogramm kann dabei optional auch als herunterladbares digitales Signal ausgeführt sein.

Ebenfalls Gegenstand der Erfindung ist ein computerlesbares Medium, auf welchem ein erfindungsgemäßes Computerprogramm gespeichert sein kann. Damit bringt das erfindungsgemäße computerlesbares Medium die gleichen Vorteile mit sich, wie sie ausführlich mit Bezug auf ein erfindungsgemäßes Computerprogramm beschrieben worden sind. Das computerlesbare Medium ist beispielsweise als ein (dauerhafter, bzw. engl. non-transitory) Datenspeicher, wie ein Flashspeicher oder eine Festplatte oder dergleichen ausgeführt. Das computerlesbare Medium kann dabei optional auch als herunterladbares digitales Signal ausgeführt sein.

Vorteilhafterweise kann ein Computerprogramm und/oder ein Computerprogrammprodukt und/oder ein computerlesbares Medium ein Auswertungsmittel aufweisen, umfassend Befehle, die bewirken, dass das optische erfindungsgemäße Erfassungssystem wenigstens einen der Verfahrensschritte eines erfindungsgemäßen Verfahrens ausführt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung eines erfindungsgemäßen Erfassungssystems, insbesondere einer Anordnung zum Mikroskopieren von ungefärbten Zellproben,
- Figur 2: eine schematische Darstellung eines Beleuchtungsmittels,
- Figur 3: eine schematische Darstellung zur Visualisierung eines erfindungsgemäßen Verfahrens,
- Figur 4: eine weitere schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

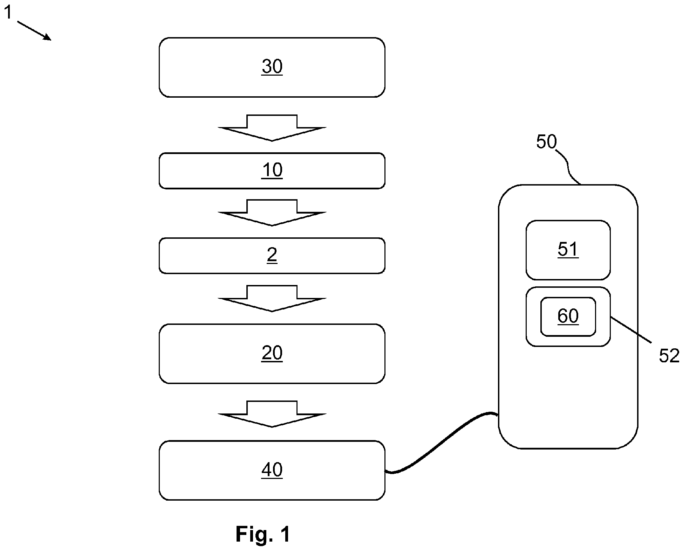

In Figur 1 ist schematisch ein erfindungsgemäßes optisches Erfassungssystem 1 dargestellt, welches eine Detektionsvorrichtung 40 und eine Auswertevorrichtung 50 aufweist. Dabei kann das optische Erfassungssystem 1 (ggf. mit Ausnahme der Auswertevorrichtung 50) als ein Mikroskop zur Durchlichtmikroskopie ausgebildet sein. So kann z. B. eine breitbandige (beispielsweise weiße) Lichtquelle 30 als Beleuchtung (d. h. zur Erzeugung des Beleuchtungslichts) verwendet werden. Um dabei kodiert unterschiedliche Beleuchtungsparameter bei der Erfassung bereitzustellen, kann im Erfassungssystem 1 ein Beleuchtungsmittel 10 vorgesehen sein. Diese Beleuchtungsmittel 10 wird beispielsweise in einen Mikroskopkondensor beim Erfassungssystem 1 eingesetzt, um vor der Beleuchtung der Probe 2 durch das Beleuchtungslicht das Beleuchtungslicht zu kodieren und/oder räumlich zu verändern. Auf diese Weise kann das Beleuchtungsmittel 10 verschiedene Beleuchtungsmuster bereitstellen, z. B. eines für jede Kodierung. Beispielsweise kann das Beleuchtungsmittel 10 dazu ausgeführt sein, an unterschiedlichen Positionen des Beleuchtungslichts die Farbinformationen "rot", "grün" und "blau" aufzuprägen. Mit diesem kodierten Beleuchtungslicht kann dann z. B. im gewöhnlichen Durchlichtmodus die Probe 2 beleuchtet werden und über ein optisches System (wie eine Abbildungsoptik 20) eine vergrößerte Abbildung auf der Detektionsvorrichtung 40, insbesondere Kamera 40, erzeugt werden. Die Detektionsvorrichtung 40 ist z. B. eine Farbkamera mit einem Farbfilterinsbesondere Bayersensor, um aus der Abbildung drei Einzelbilder in den Spektralbereich in rot, grün und blau gleichzeitig aufzunehmen. Alternativ oder zusätzlich kann die Kamera wenigstens einen Polarisationsfilter aufweisen, um anhand der Abbildung Einzelbilder für die unterschiedlichen Polarisationen aufzunehmen. Die Einzelbilder entsprechen dabei z. B. den Erfassungsinformationen.

Es kann ferner vorgesehen sein, dass das Beleuchtungslicht jeder unterschiedlichen Kodierung das optische Erfassungssystem anders und unabhängig voneinander durchläuft, sodass durch die kodierungsabhängige Aufzeichnung der Erfassungsinformationen unterschiedliche Informationen über die Probe bereitgestellt werden. Die Einzelbilder und/oder die Erfassungsinformationen 110 können anschließend von der Detektionsvorrichtung 40 an eine Auswertevorrichtung 50 übertragen werden, um z. B. mittels eines Prozessors 51 und einem Datenspeicher 52 eine Auswertung der Erfassungsinformationen 110 durchzuführen. Hierzu weist der Datenspeicher 52 beispielsweise ein Auswertungsmittel 60, wie ein Computerprogramm, auf.

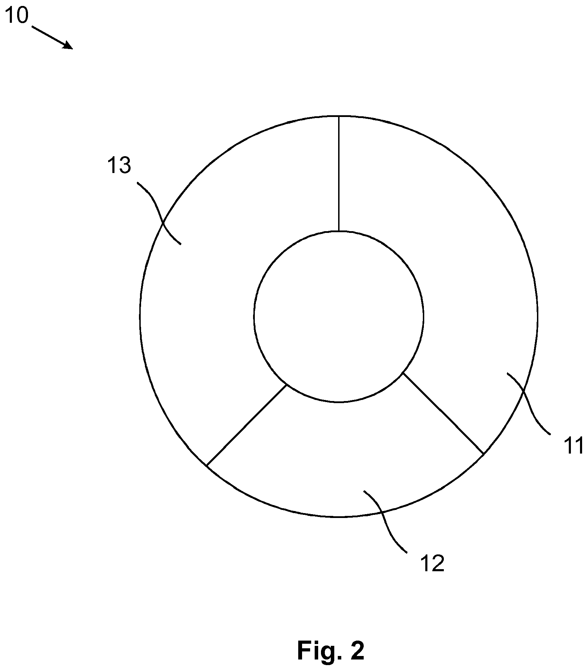

In Figur 2 ist eine beispielhafte Konfiguration eines Beleuchtungsmittel 10 gezeigt. Das Beleuchtungsmittel 10 ist z. B. als räumlich strukturierter Filter, insbesondere Polarisations- und/oder Farbfilter ausgeführt. Außerdem kann es sich bei dem Beleuchtungsmittel 10 um einen Transmissionsfilter handeln, welcher z. B. in den Mikroskopkondensor eines Transmissionsmikroskops eingesetzt werden kann. Wenn das Beleuchtungsmittel 10 zumindest einen Farbfilter aufweist, kann es für eine Farbkodierung eine geeignete Anpassung eines breitbandigen (weißen) Beleuchtungslichts erzeugen. Wenn die Kodierung beispielsweise durch eine unterschiedliche Polarisation erzeugt wird, so kann entsprechend die Polarisation des Beleuchtungslichts für die Kodierung verändert werden. Hierzu sind beispielsweise unterschiedliche Segmente 11, 12, 13 des Beleuchtungsmittels 10 vorgesehen, um durch die Segmente unterschiedliche Kodierungen, wie Farbfilterungen oder Polarisationsfilterungen, zu erzeugen. Beispielsweise kann ein erstes Segment 11 als ein roter Farbfilter, ein zweites Segment 12 als ein grüner Farbfilter und ein drittes Segment 13 als ein blauer Farbfilter ausgeführt sein. Dabei kann das Beleuchtungsmittel 10 so in das Erfassungssystem 1 eingesetzt werden, dass das Beleuchtungslicht (z. B. vom Kondensor und/oder von der Lichtquelle 30) auf die in der Figur 2 in einer Draufsicht gezeigten Fläche trifft, räumlich durch die Segmente 11, 12, 13 verändert wird und anschließend auf der gemäß Figur 2 rückseitigen Fläche wieder austritt.

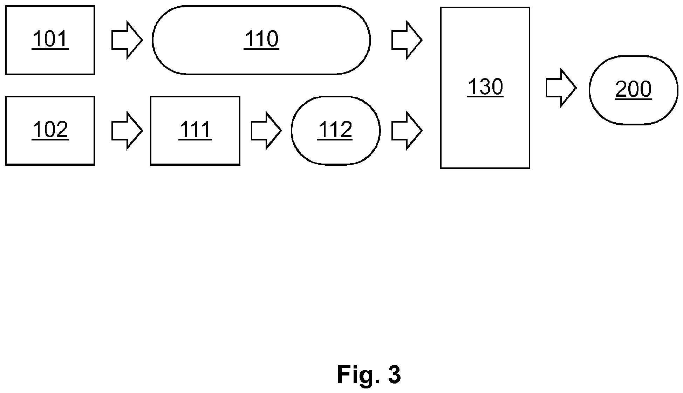

In Figur 3 ist schematisch ein Anlernvorgang für ein Auswertungsmittel 60 gezeigt, welches optional Teil eines erfindungsgemäßen Verfahrens sein kann. Zunächst erfolgt hierbei eine Durchführung einer Erfassung 101 eines Bereichs der Probe 2 durch das oder ein weiteres optisches Erfassungssystem 1, um wenigstens zwei unterschiedliche Anlerninformationen 110 über die Probe dadurch zu erhalten, dass für die Anlerninformationen 110 wenigstens ein Erfassungsparameter, insbesondere Beleuchtungsparameter, variiert. Für die Variation des Erfassungsparameters werden beispielsweise durch ein Beleuchtungsmittel 10 Beleuchtungsmuster erzeugt, insbesondere durch eine räumlich strukturierte Filterung des Beleuchtungslichts. Die Anlerninformationen 110 sind beispielsweise als Datensätze ausgeführt, welche z. B. den Erfassungsinformationen 110 entsprechen können. Aus diesen Anlerninformationen 110 können dann Anwendungsdaten für das Auswertungsmittel 60 erzeugt werden. Anschließend kann eine Referenzerfassung 102 oder Referenzauswertung 102 durchgeführt werden. Vorzugsweise wird die Referenzerfassung 102 am gleichen Bereich der Probe 2 durchgeführt, wie die Erfassung 101. Auf diese Weise kann durch eine Referenzverarbeitung 111, insbesondere eine Segmentierung 111, ein Ground Truth 112 ermittelt werden. Somit kann es sich bei dem Ground Truth z. B. um eine Segmentierungsmaske handeln, welche die relevanten Bereiche der Probenstelle der Probe 2 maskiert. Eine automatisierte Markierung der relevanten Probenbereiche kann z. B. dadurch erfolgen, dass an derselben Probenstelle eine Fluoreszenzaufnahme durchgeführt wird, in welcher relevante Fluoreszenzmarkierungen der Probe detektiert werden und anschließend in diesem Fluoreszenzbild über eine digitale Bildverarbeitung einer Segmentierung vorgenommen wird. Beim anschließenden Anlernen 130 des Auswertungsmittels 60 kann unter Verwendung der Anwendungsdaten und des Ground Truth 112 eine Transferinformation 200 bestimmt werden. In anderen Worten kann anhand von Anlerninformationen und Segmentierungsmasken ein Training des Auswertungsmittels 60, z. B. eines neuronalen Netzes durchgeführt werden. Das Auswertungsmittel 60 kann dabei gegebenenfalls automatisch lernen die relevanten Bereiche der Probenstelle zu erkennen. Das Ergebnis dieses Anlernens 130 kann entsprechend die Transferinformation 200 sein, in anderen Worten als ein trainiertes neuronales Netz oder dergleichen. Dieses kann zudem ein Modell für die Schätzung der Positionen und/oder Konturen relevanter Bereiche in der Anlerninformation 101 aufweisen.

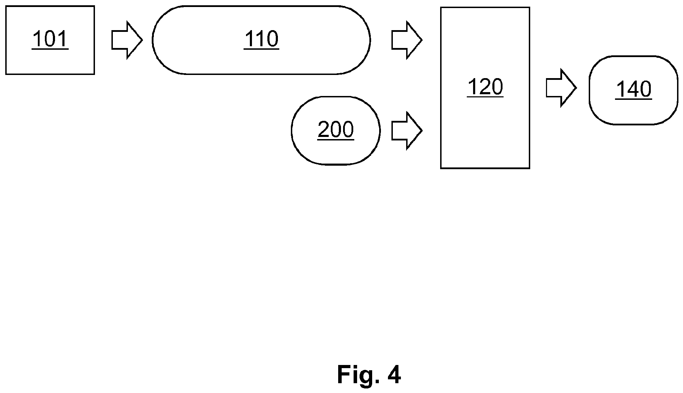

In Figur 4 ist gezeigt, dass auf Grundlage einer derart maschinell angelegten Transferinformation eine Ergebnisinformation, wie eine Schätzung relevanter Bereiche an einer Probenstelle, automatisiert ermittelt werden kann. Hierbei kann zunächst ein Bereitstellen, insbesondere Erfassen 101, von wenigstens zwei unterschiedlichen Erfassungsinformationen 110 über die Probe 2 erfolgen, insbesondere durch das Erfassungssystem 1. Anschließend kann eine Auswertung 120 der Erfassungsinformationen 110, insbesondere durch ein Auswertungsmittel 60 anhand einer maschinell angelernten Transferinformation 200 erfolgen, um eine Ergebnisinformation 140 über die Probe 2 zu bestimmen. Es ist dabei möglich, dass die Transferinformation für eine unterschiedliche Erfassungsparametrisierung der Erfassungsinformationen angelernt ist, bei welcher sich die Erfassungsinformationen 110 zumindest hinsichtlich eines Beleuchtungsparameters des Erfassungssystems voneinander kodiert, insbesondere Polarisations- und/oder Farbkodiert, unterscheiden. Insbesondere kann es sich dabei bei der Transferinformation 200 und/oder bei dem Auswertungsmittel 60 um eine Transferinformation 200 beziehungsweise um ein Auswertungsmittel 60 gemäß dem in Figur 3 beschriebenen Anlernverfahren handeln. Durch die Nutzung der kodierten Beleuchtung können die Erfassungsinformationen 110 wesentlich mehr Informationen über die Probe 2 enthalten, welche sodann von dem Auswertungsmittel 60 (wie einem neuronalen Netz) genutzt werden können, um beispielsweise eine Schätzung der relevanten Probenbereiche mit sehr hoher Genauigkeit zu erreichen. Das Auswertungsmittel 60 kann dabei den Transfer der Informationen aus den Erfassungsinformationen 110 in eine Ergebnisinformation 140 unabhängig von einem konkreten physikalischen Modell des optischen Erfassungssystems 1 durchführen und ist damit sehr robust gegenüber unbekannter Eigenschaften des optischen Erfassungssystems 1 und Abweichungen von einem möglicherweise vorhandenen, idealisierten physikalischen Modell. Es ist dabei möglich, dass zur Durchführung eines erfindungsgemäßen Verfahrens keinerlei Kenntnisse über das optische Erfassungssystem 1 erforderlich sind und/oder genutzt werden. Auch kann es möglich sein, dass die Ergebnisinformation 140, insbesondere eine Schätzung der relevanten Probenbereiche der Probe 2, aus einer einzigen Aufnahme der Probe 2 ermittelt wird. Diese Aufnahme weist beispielsweise mehrere unterschiedliche Erfassungsinformationen 110 auf, d.h. parallel akquirierte Aufnahmen der gleichen Probenstelle gemäß unterschiedlicher Kodierung und/oder unterschiedlichen Beleuchtungsparametern des Erfassungssystems 1. Bei den relevanten Probenbereichen handelt es sich insbesondere um eine Lokalisierung von Zellen und/oder Zellkernen und/oder um eine Segmentierung der Zellen und/oder um eine räumliche Information über Objekte der Probe 2.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Erfassungssystem
- 2: Probe

- 10: Beleuchtungsmittel, räumlich strukturierter Farbfilter
- 11: erstes Segment, erster Farbbereich
- 12: zweites Segment, zweiter Farbbereich
- 13: drittes Segment, dritter Farbbereich

- 20: Abbildungsoptik

- 30: Lichtquelle

- 40: Detektionsvorrichtung, Kamera

- 50: Auswertevorrichtung, Computer
- 51: Prozessor
- 52: Datenspeicher

- 60: Auswertungsmittel

- 101: Erfassung
- 102: Referenzerfassung
- 110: Erfassungsinformation, Farbbilder
- 111: Referenzverarbeitung, Segmentierung
- 112: Ground Truth

- 120: Auswertung, Machine learning interference
- 130: Anlernen, Machine learning training

- 140: Ergebnisinformation
- 200: Transferinformation, Trainiertes Modell

## Patentansprüche

1. Verfahren zur mikroskopischen Auswertung (120) einer Probe (2), insbesondere wenigstens einer ungefärbten Objekt- oder Zellprobe (2), bei einem optischen Erfassungssystem (1),
**wobei die nachfolgenden Schritte durchgeführt werden:**
- Bereitstellen von wenigstens zwei unterschiedlichen Erfassungsinformationen (110) über die Probe (2), insbesondere durch das Erfassungssystem (1),
- Durchführen einer Auswertung (120) der Erfassungsinformationen (110), insbesondere durch ein Auswertungsmittel (60), anhand einer maschinell angelernten Transferinformation (200), um eine Ergebnisinformation (140) über die Probe (2) zu bestimmen,
wobei die Transferinformation (200) für eine unterschiedliche Erfassungsparametrisierung der Erfassungsinformationen (110) angelernt ist, bei welcher sich die Erfassungsinformationen (110) zumindest hinsichtlich eines Beleuchtungsparameters des Erfassungssystems (1) voneinander kodiert, insbesondere polarisations- und/oder farbkodiert, unterscheiden.

2. Verfahren nach Anspruch 1,
**dadurch gekennzeichnet,**
**dass** zum Bereitstellen der nachfolgende Schritt vorgesehen ist:
- Durchführen zumindest einer Erfassung (101) der Probe (2) durch das optische Erfassungssystem (1), um die unterschiedlichen Erfassungsinformationen (110) durch eine Variation des Beleuchtungsparameters zu erhalten,
wobei die Variation als eine Veränderung der räumlichen Beleuchtungsstruktur und/oder der Beleuchtungsfarbe und/oder der Beleuchtungspolarisation für die unterschiedlichen Erfassungsinformationen (110) erfolgt, wobei vorzugsweise hierzu ein Beleuchtungslicht räumlich strukturiert und/oder zur Farbkodierung wenigstens zweifarbig und/oder zur Polarisationskodierung unterschiedlich polarisiert ist, sodass insbesondere farb- und/oder polarisationsabhängig verschiedene Beleuchtungsmuster erzeugt werden, und bevorzugt diese Beleuchtungsmuster für die Erfassungsinformationen (110) spezifisch sind.

3. Verfahren nach Anspruch 1 oder 2,
**dadurch gekennzeichnet,**
**dass** die Auswertung (120) durch ein Auswertungsmittel (60) durchgeführt wird, welches als ein auf Maschinenlernen und/oder Deep Learning und/oder künstlicher Intelligenz basiertes Computerprogramm ausgeführt ist, vorzugsweise als künstliches neuronales Netz.

4. Verfahren nach einem der vorhergehenden Ansprüche,
**dadurch gekennzeichnet,**
**dass** die Erfassungsparametrisierung der Erfassungsinformationen (110) sich dadurch voneinander unterscheidet, dass bei einer Erfassung (101) der Erfassungsinformationen (110) ein, insbesondere breitbandiges, Beleuchtungslicht des Erfassungssystems (1) für unterschiedliche der Erfassungsinformationen (110) unterschiedliche räumliche und/oder kodierte Anpassungen aufweist, vorzugsweise durch eine räumliche Strukturierung und/oder Farbkodierung und/oder Polarisation des Beleuchtungslichts.

5. Verfahren nach einem der vorhergehenden Ansprüche,
**dadurch gekennzeichnet,**
**dass** die unterschiedliche Erfassungsparametrisierung der Erfassungsinformationen (110) dafür spezifisch ist, dass bei einer Erfassung (101) eine Anpassung eines Beleuchtungslichts mittels eines Beleuchtungsmittels (10) des Erfassungssystems (1) durchgeführt wird, wobei das Beleuchtungsmittel (10) eine kodierte, vorzugsweise unterschiedlich polarisierende und/oder mindestens zweifarbige, räumliche Struktur (11, 12, 13) aufweist, um kodierungsabhängig, vorzugsweise farbabhängig und/oder farbkodiert und/oder polarisationsabhängig und/oder polarisationskodiert, verschiedene Beleuchtungsmuster für die Probe (2) bereitzustellen, wobei insbesondere für unterschiedliche der Beleuchtungsmuster unterschiedliche der Erfassungsinformationen (110) bereitgestellt werden.

6. Verfahren nach einem der vorhergehenden Ansprüche,
**dadurch gekennzeichnet,**
**dass** die unterschiedliche Erfassungsparametrisierung der Erfassungsinformationen (110) dafür spezifisch ist, dass eine Erfassung (101) der Erfassungsinformationen (110) durch eine gleichzeitige Beleuchtung mit verschiedenen Beleuchtungsfarben und/oder Polarisationen erfolgt, wobei wenigstens eine farbabhängige und/oder polarisationsabhängige, insbesondere zwei- oder mehrdimensionale, Probenaufzeichnung durchgeführt wird, um die wenigstens zwei Erfassungsinformationen (110) farb- und/oder polarisationsabhängig bereitzustellen.

7. Verfahren nach einem der vorhergehenden Ansprüche,
**dadurch gekennzeichnet,**
**dass** zum Bereitstellen wenigstens eine Probenaufzeichnung durch eine Detektionsvorrichtung (40), insbesondere Kamera (40), des Erfassungssystems (1) mittels Polarisations- und/oder Farbfilterung durchgeführt wird, um unterschiedliche der Erfassungsinformationen (110) für unterschiedliche Polarisationen und/oder Beleuchtungsfarben aus der Probenaufzeichnung zu erhalten, wobei vorzugsweise die Detektionsvorrichtung (40) zur Polarisationsfilterung wenigstens einen Polarisationsfilter und/oder zur Farbfilterung ein Farbfiltermuster aufweist.

8. Verfahren nach einem der vorhergehenden Ansprüche,
**dadurch gekennzeichnet,**
**dass** zum Bereitstellen die nachfolgenden Schritte durchgeführt werden:
- Ermitteln einer ersten Aufnahme eines Bereichs der Probe (2), vorzugsweise mit einer ersten Beleuchtungsfarbe und/oder Polarisation, um eine erste Erfassungsinformation (110) gemäß einer ersten Erfassungsparametrisierung zu erhalten,
- Ermitteln wenigstens einer zweiten Aufnahme des gleichen Bereichs der Probe (2), vorzugsweise mit wenigstens einer zweiten Beleuchtungsfarbe und/oder Polarisation, welche sich von der ersten Beleuchtungsfarbe und/oder Polarisation unterschiedet, um wenigstens eine zweite Erfassungsinformation (110) gemäß wenigstens einer zweiten Erfassungsparametrisierung zu erhalten.

9. Verfahren nach einem der vorhergehenden Ansprüche,
**dadurch gekennzeichnet,**
**dass** die Auswertung (120) durch ein Auswertungsmittel (60) durchgeführt wird, welches die Transferinformation (200) aufweist, wobei zum Anlernen (130) des Auswertungsmittels (60) die nachfolgenden Schritte durchgeführt werden:
- Durchführen einer Erfassung (101) eines Bereichs der Probe (2) durch das oder ein weiteres optisches Erfassungssystem (1), um wenigstens zwei unterschiedliche Anlerninformationen über die Probe (2) dadurch zu erhalten, dass für die Anlerninformationen wenigstens ein Erfassungsparameter, insbesondere Beleuchtungsparameter, variiert,
- Bestimmen von Anwendungsdaten für das Auswertungsmittel (60) anhand der Anlerninformationen,
- Durchführen einer Referenzerfassung (102) des gleichen Bereichs der Probe (2) durch das oder das weitere optische Erfassungssystem (1), um ein Ground Truth (112) für das Auswertungsmittel (60) zu bestimmen,
- Anlernen (130) des Auswertungsmittels (60) unter Verwendung der Anwendungsdaten und des Ground Truth (112), um die Transferinformation (200) zu bestimmen.

10. Verfahren nach einem der vorhergehenden Ansprüche,
**dadurch gekennzeichnet,**
**dass** die Ergebnisinformation (140), und/oder ein Ground Truth (112) zum Anlernen (130) eines Auswertungsmittels (60), eine der nachfolgenden Informationen über die Probe (2) ist:
- eine Detektion, insbesondere Segmentierung (111) oder Lokalisierung von Objekten und/oder Zellen der Probe (2), insbesondere eine Segmentierungsmaske,
- eine Schätzung der Klassifizierung oder Regression von Pixel oder Objekten oder Probenbereichen der Probe (2),
- ein zytometrisches oder histologisches Analyseergebnis,
- eine Phaseninformation,
- eine dreidimensionale Information über die räumliche Struktur der Probe (2),
- wenigstens eine Fluoreszenzeigenschaft der Probe (2),
- ein erweiterter Schärfetiefenbereich einer Probenaufzeichnung.

11. Optisches Erfassungssystem (1), aufweisend
- eine Detektionsvorrichtung (40) zur Erfassung (101) von wenigstens zwei unterschiedlichen Erfassungsinformationen (110) über die Probe (2), welche sich wenigstens hinsichtlich eines Beleuchtungsparameters bei der Erfassung (101) kodiert unterscheiden,
- eine Auswertevorrichtung (50), die geeignet ist, anhand einer maschinell angelernten Transferinformation (200) aus den Erfassungsinformationen (110) eine Ergebnisinformation (140) über die Probe (2) zu bestimmen.

12. Optisches Erfassungssystem (1) nach Anspruch 11,
**dadurch gekennzeichnet,**
**dass** ein Beleuchtungsmittel (10) vorgesehen ist, welches für mindestens zwei unterschiedliche Einstellungen des Beleuchtungsparameters eine unterschiedlich polarisierende und/oder mindestens zweifarbige räumliche Struktur aufweist, vorzugsweise wenigstens zwei benachbart angeordnete Polarisations- und/oder Farbfilter (110) aufweist, um polarisations- und/oder farbabhängig verschiedene Beleuchtungsmuster bereitzustellen, und/oder dass das Beleuchtungsmittel (10) als ein Kondensoreinsatz ausgebildet ist, und zur Filterung eines Beleuchtungslichts in eine Kondensoreinheit des optischen Erfassungssystems (1) eingesetzt ist, um eine Kodierung, insbesondere Polarisations- und/oder Farbkodierung des Beleuchtungslichts bereitzustellen, und/oder dass die Detektionsvorrichtung (40) wenigstens einen Kamerasensor aufweist, vorzugsweise einen RGB-Kamerasensor, und/oder als eine polarisationssensitive Kamera ausgebildet ist, um vorzugsweise eine Dekodierung des Beleuchtungslichts durchzuführen.

13. Optisches Erfassungssystem (1) nach einem der Ansprüche 11 oder 12,
**dadurch gekennzeichnet,**
**dass** das optische Erfassungssystem (1) als ein Mikroskopsystem zur Durchlichtmikroskopie ausgebildet ist und/oder zur Durchführung eines Verfahrens nach einem der Ansprüche 1 bis 10 ausgeführt ist.

14. Computerprogramm, umfassend Befehle, die bei der Ausführung des Computerprogramms durch einen Computer (50) diesen veranlassen, die Schritte eines Verfahrens nach einem der Ansprüche 1 bis 10 auszuführen.

15. Computerlesbares Medium, auf dem das Computerprogramm nach Anspruch 14 gespeichert ist.
